# EUROPEAN PATENT SPECIFICATION

(11) **EP 0 655 588 B1**
(45) Date of publication and mention of the grant of the patent: **01.07.1998**
(21) Application number: 93919333.0
(22) Date of filing: 09.09.1993
(51) Int. Cl.: F24J 2/34, A47K 3/22

(54) **SHOWER APPARATUS HEATED BY SOLAR RADIATION**
SOLARE DUSCHVORRICHTUNG
APPAREIL-DOUCHE CHAUFFE PAR RAYONNEMENT SOLAIRE

(30) Priority: 02.04.1993 ES 9300690
(43) Date of publication of application: 31.05.1995
(73) Proprietor: RODRIGUEZ SANCHEZ, Jesus, E-Talavera de la Reina (ES)
(72) Inventor: RODRIGUEZ SANCHEZ, Jesus, E-Talavera de la Reina (ES)
(74) Representative: Rodriguez de Rivas, Paloma
(86) International application number: PCT/ES93/00073
(87) International publication number: WO 94/23251

(56) References cited:
- AT-B- 391 204
- BE-A- 901 746
- CH-A- 675 470
- DE-A- 2 842 416
- DE-A- 2 933 511
- DE-A- 3 002 852
- FR-A- 1 453 606
- FR-A- 2 414 601

## Description

The present invention relates to the use of a shower apparatus, which takes advantage of the solar heat and environmental temperature in order to heat the water which is used in open spaces, such as pools, gardens , chalets, campings, etc.

This type of shower uses a rigid cylinder as heating recipient upon which solar beams fall directly which provide the heating supply onto the water contained in the same. The cylinder is installed at a more or less vertical position for which a plate is attached to the lower part thereof which serves as support and fixing means of the cylinder at the place where the shower is installed. At the upper end of the cylinder a water pulverizer or atomizer with adjustable inclination is installed by means of a hose. Said pulverizer is supplied directly from the water contained in the cylinder and/or also directly from the water maintenance installations. The selection or mixing of each supply channel is carried out by means of valves installed at the vertical side of the cylinder together with the corresponding pipings. All of which is protected inside a longitudinal protector attached to the cylinder and in vertical position. The grips of the valves, situated outside said housing allow for the adjustment and selection of cold and/or hot water.

Furthermore, said shower apparatus has connection for the water supply piping, and cylinder emptying plug in order to avoid deterioration due to frost in winter time.

For a higher efficiency in obtaining heat from the solar beams, use is made, in the construction of the apparatus, from materials of high thermal conductivity and high resistance against climatic erosion and corrosion caused by waters.

The cylinder-recipient may be provided by a protecting cover which prevents the cooling of the contained water caused by the environmental air.

The products used in the manufacturing of the cylinder-deposit are rigid materials and conductors of heating energy, such as for example, aluminium-magnesium, which is capable of gaining not only the solar heat, but the environmental heat while the materials used in the existing solar gainers only gain the solar energy and not the environmental energy since they are hot water accumullators.

The reason for using materials such as those mentioned hereinabove, for example, aluminium-magnesium is to obtain an excellent efficiency during the day-time activity hours in gardens, pools, etc, for which the present invention is not based upon what is normally known in relation to storage and accumulating hot water for use, for example, at five o'clock in the morning, but it deals with a more rapid and efficient system of producing hot water at times when it is really needed and used.

Another advantage is that the beams which fall upon one point of the cylinder-deposit are rapidly distributed to all its surroundings so that the water has more contact with the thermal gainer element.

A portable shower apparatus for individual use is known from FR-A-1 453 606 which comprises a water recipient for storage of water which may be positioned vertically at any convenient pleace without fixed installation by means of feet during use and capable of being transported by means of wheels. Said known shower apparatus uses water supply containers such as buckets in order to supply either cold or hot water or both for use. Also said shower apparatus is capable of using a gas burner for heating the water contained therein in such case said gas burner being placed beneath the water recipient where water is stored. A pump is used for providing the required pressure for the water to be taken from the mentioned buckets and to be supplied to a shower head during use. Therefore, the shower apparatus of FR-A-1 453 606 either uses hot water already provided in a bucket, or uses a gas burner in order to heat the water contained in the water recipient of the shower apparatus.
The shower apparatus of FR-A-1 453 606 however is not used for heating water by taking advantage of solar radiation and/or environmental temperature.

The shower apparatus of the present invention is however used, as set out in claim 1 to heat water both by solar radiation and by the environmental temperature, and uses a water recipient made of a highly thermally conductive material so as to easily be able to exchange heat between the water and the ambient air.

The object of the present invention would be better understood with the aid of the following description made on the basis of a practical example of an embodiment. Said description is carried out with the help of the accompanying drawings in which:
Figure 1 shows an elevation view of the system object of the present invention.
Figure 2 shows in a plan view, the direction in which the device is placed.
Figure 3 shows an elevation view of the shower in operation.

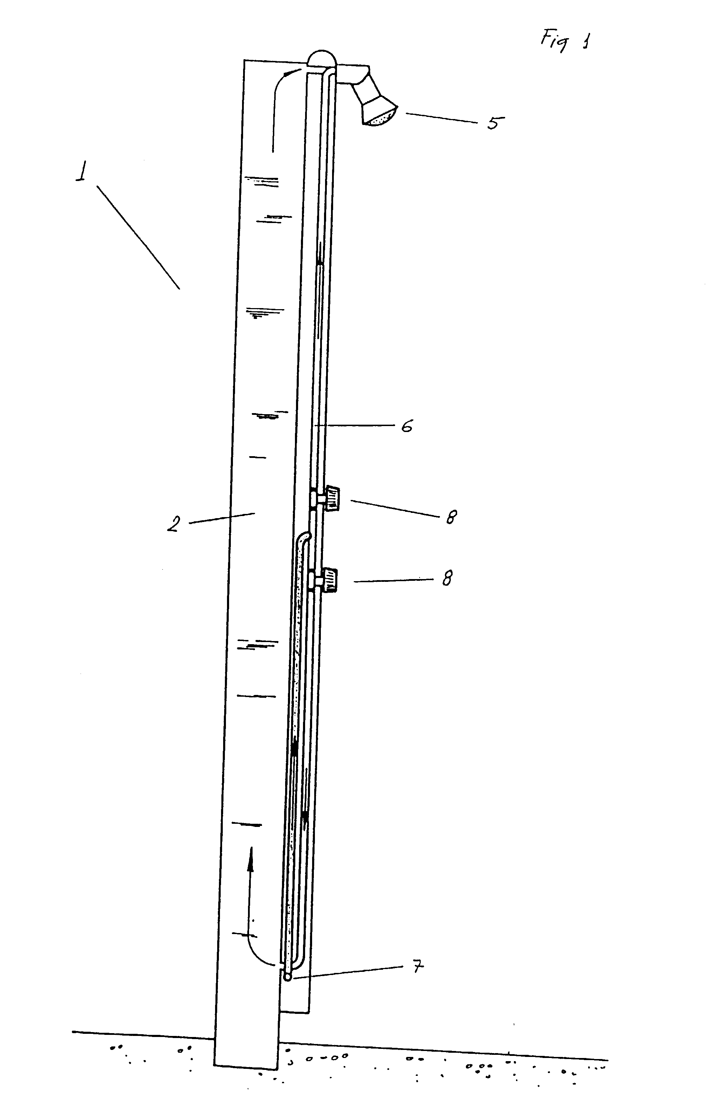

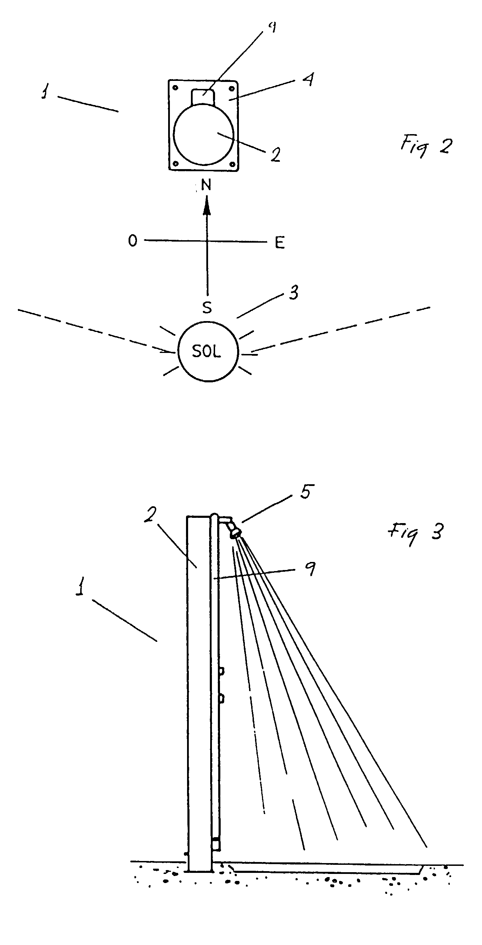

This type of shower (1) uses a rigid cylinder (2) as a heating recipient, over which, solar beams (3) fall directly, acting as heating supply on the water contained therein. The cylinder (2) is installed in a more or less vertical position for which a plate (4) is attached to the lower part thereof which serves as support and fixing means of the cylinder (2) at the palce where the shower (1) is installed. At the upper end of the cylinder a water pulverizer or atomizer (5) with adjustable inclination is installed by means of a hose. Said pulverizer (5), is supplied directly by the water contained in the cylinder (2) through the conduit (6) and/or also directly from the water maintenance istallation (7). The selection or mixture of each supply channel is made by means of valves (8) installed at a vertical side ofthe cylinder (2) together with the coressponding pipings (6) and (7). All of which is protected inside a longitudinal protector (9) attached to the cylinder (2) in vertical position. The grips of the valves (8), located outside said housing (9), allow for the adjustment and selection of cold and/or hot water.

Furthermore, said shower apparatus (1) has connection for the water supply piping, and cylinder emptying plug in order to avoid deterioration due to frust in winter time.

For a higher efficiency in obtaining heat from the solar beams, use is made, in the construction of the apparatus, from materials of high thermal conductivity and high resistance against climatic erosion and corrosion caused by waters.

The cylinder-recipient may be provided with a protecting cover which prevents the cooling of the contained water caused by the envioromental air.

Having sufficiently described the nature of the present invention as well as one way of putting it into practice, it only remains to be added that changes in the form, materials and dispositions may be introduced in the invention as a whole, or in parts which it is composed of, as long as such alterations do not vary substantially the characteristics of the invention which is claimed as follows:

## Claims

1. Use of shower apparatus for heating water contained therein, in open spaces, by means of solar radiation and / or environmental temperature said shower apparatus comprising a cylindrical water recipient (2) for storage of water, connected to a water supply and having means (5) for pulverizing water during use, said apparatus being installed in a substantially vertical position, the water recipient (2) being constructed from a rigid and highly thermally conductive material which is used for absorbing heat from solar radiation as well as environmental temperature, said cylindrical water recipient (2) supporting the structure of the shower apparatus (1).

2. Use of shower apparatus according to the previous claim, characterised in that the highly thermally conductive material used for constructing said water recipient is an aluminum-magnesium alloy.

3. Use of shower apparatus according to the previous claims, characterised in that the material of high thermal conductivity is formed so as to be used for providing high resistance against erosion and corrosion.

4. Use of shower apparatus according to the previous claims, characterised in that after the water in the recipient (2) is heated, a protecting cover is used to cover the cylindrical water recipient in order to prevent refrigeration by the cooler enviromental air.

5. Use of shower apparatus according to the previous claims, characterised in that an entry for cold water (7) and two channels of cold and hot water (6), and valves (8) for mixing the content of each channel are used in order to select or adjust the temperature of the water to be used in the shower (1).

6. Use of shower apparatus according to the previous claims, characterised in that it uses an emptying plug for the cylindrical water recipient (2) in order to empty water from the latter.

## Patentansprüche

1. Verwendung von einem Brausengerät für die Heizung dessen Wasserinhaltes, in aussenliengenden Flächen, mittels der Sonnenstrahlung und / oder der Umgebungstemperatur, einen zylindrischen Wasserbehälter (2) für Wasserspeicherung von diesem erwähenten Brausengerät erhaltend, an einer Wasserförderungsleitung angeschlossen, und mit Absprühvorrichtungsmitteln (5) während seiner Verwendug vorgesehend, auf wesentlich senkrechter Lage vom diesem erwähenten Brausengerät montiert seiend; das Wasserbehälter (2) aus einem steifen und hoch wärmeleitfähigen Werkstoff hergestellt seiend, welcher für die Wärmeaufnahme der Sonnenstrahlung sowie der Umgebungstemperatur dienen wird, das Tragwerk dieses Brausengerätes (1) von diesem erwähnten zylindrischen Wasserbehälter (2) aufnehmend.

2. Verwendung von einem Brausengerät nach obengenanntem Anspruch 1, dadurch gekennzeichnet dass, das zu verwendete hoch wärmeleitfähige Werkstoff, für die Herstellung vom erwähnten Wasserbehälter, aus einer Aluminium-Magnesiumlegierung bestehend ist.

3. Verwendung von einem Brausengerät nach obengenannten Ansprüchen 1 und 2, dadurch gekennzeichnet dass, das hoch wärmeleitfähige Werkstoff der Art hergestellt ist, um seine Verwendung für eine hohe Widerstandsfähihkeit gegen Verwitterung und Korrosion bestehen lassen zu können.

4. Verwendung von einem Brausengerät nach obengenannten Ansprüchen 1, 2 und 3, dadurch gekennzeichnet dass, nach dem Wasser im Behälter (2) erwärmt wird, eine Schutzumhüllung auf den zylindrischen Wasserbehälter aufzuziehen ist, um seine Erkühlung durch eine mindere Umgebungstemperatur vermeiden zu können.

5. Verwendung von einem Brausengerät nach obengenannten Ansprüchen von 1 bis 4, dadurch gekennzeichnet dass, ein Kaltwassereintritt (7) und zwei Leitungen für Kalt- und Warmwasser (6), und Mischungsleitungsventile (8) vorgesehen sind, um die zu verwendende Wassertemperatur im Brausengerät (1) auswählen und nachstellen zu können.

6. Verwendung von einem Brausengerät nach obengenannten Ansprüchen von 1 bis 5, dadurch gekennzeichnet dass, der zylindrische Wasserbehälter (2) mit einem Stöpsel vorgesehen ist, um ihn entleeren zu können.

## Revendications

1. Utilisation d'un appareil de douche pour le chauffage de l'eau contenu dans cet appareil, pour espaces ouverts, moyen la radiation solaire et/ou la temperature de l'environnement, comprenent cet appareil de douche un récipient cylindrique (2) pour le magasinage de l'eau, couplé a un tuyau de distribution et pourvu d'un dispositif(5) pour arroser l'eau pendant le fonctionnement, cet appareil devra basiquement poser en position vertical, avec le récipient pour l'eau (2) fabriqué avec un materiel rigid et d'une haute conductivité thermique qui est utile pour absorber le chaleur de la radiation solaire mème comme de la temperature de l'environnement, et cet appareil cylindrique pour l'eau (2) supportant l'estructure de l'appareil de douche.

2. Utilisation d'un appareil de douche d'accord avec la revendication précédent, characterizé parce que le materiel du haute conductivité thermique employé dans la fabrication de cet appareil pour l'eau est une alliage de aluminium et magnésium.

3. Utilisation d'un appareil de douche d'accord avec les revendications précédents, charactérisé parce que le materiel de haute conductivité tèrmique est composé pour presenter une haute resistance contre l'erosion et la corrosion.

4. Utilisation d'un appareil de douche d'accord avec les revendications précédents, characterisé parce que aprés du chauffage de l'eau dans le rècipient (2), on y utilise une couvercle de protection pour couvrir le rècipient cylindrique pour l'eau afin d'éviter la refiigeration à cause d'un air de l'environnement plus froid.

5. Utilisation d'un appareil de douche d'accord avec les revendications précédents, characterisé parce que l'appareil est pourvu d'une èntrée pour l'eau froid (7) et deux conduites pour d'eau froid et chaud (6) et soupapes (8) pour leur mélanger afin de choisir et régler la temperature de l'eau utilisée dans la douche (1).

6. Utilisation d'un appareil de douche d'accord avec les revendications précédents, characterisé parce que il utilise un bouchon de vidange pour le récipient cylindrique pour l'eau (2) afin de vidanger l'eau du récipient.
